# EUROPEAN PATENT APPLICATION

(11) **EP 4 664 577 A2**
(43) Date of publication of application: **17.12.2025**
(21) Application number: 25177773.6
(22) Date of filing: 20.05.2025
(51) Int. Cl.: H01M 10/04, H01M 50/536, H01M 50/538

(54) **TAB WELDING STRUCTURE AND BATTERY**

(30) Priority: 13.06.2024 CN 202421353915 U; 12.07.2024 WO PCT/CN2024/105230
(71) Applicant: HUIZHOU EVE POWER CO., LTD, Huizhou, Guangdong 516039 (CN); Eve Power Co., Ltd., Jingmen, Hubei 448000 (CN)
(72) Inventor: LIN, Zhibing, Huizhou, Guangdong, 516039 (CN); SHU, Kuanjin, Huizhou, Guangdong, 516039 (CN); DUAN, Dong, Huizhou, Guangdong, 516039 (CN); LIU, Ziwen, Huizhou, Guangdong, 516039 (CN); HE, Wei, Huizhou, Guangdong, 516039 (CN); AN, Suli, Huizhou, Guangdong, 516039 (CN)
(74) Representative: Berggren Oy

(57) **Abstract**

A tab welding structure and a battery are provided, relating to the field of battery technology. The tab welding structure includes a wound body (100) with an electrode plate, and a full tab (110). The full tab (110) is electrically connected to the electrode plate and located at one end of the wound body (100). A current collector (300) is welded to the full tab (110) to form welding point groups (200). The welding point groups (200) are arranged in a radial pattern around a center of the wound body (100). Each welding point group (200) includes welding points (211) arranged in a wave pattern along a radial direction of the wound body. This configuration enhances the uniformity of current conduction in the wound body (100) and reduces the amount of current loss.

## Description

### TECHNICAL FIELD

The present application relates to a field of battery technology, and in particular to a tab welding structure and a battery.

### DESCRIPTION OF RELATED ART

In cylindrical batteries, tabs are welded to collector plates to form multiple welding points. Through the welding points, current is conducted to an electrode plate. Tab welding typically employs a full tab laser welding method, which simplifies the welding process.

### SUMMARY OF INVENTION

After the tabs are welded, the path of current flow through the tabs is irregular and chaotic. Some areas of the electrode plate experience repeated over-current, increasing current loss and affecting over-current performance of the electrode plate.

To improve the deficiencies of the existing technology, a main objective of the present application is to provide a tab welding structure and a battery that improve the over-current performance of an electrode plate and reduces current loss caused by full tab welding.

To achieve the above objectives, in a first aspect, the present application provides a tab welding structure, including:
a wound body;
a full tab, arranged at one end of the wound body and electrically connected to the wound body;
a current collector, welded to the full tab to form a plurality of welding point groups, wherein the welding point groups are arranged in a radial pattern around a center of the wound body, and each of the welding point groups comprises a plurality of welding points arranged in a wave pattern along a radial direction of the wound body.

In a second aspect, the embodiment of the present application provides a battery, including the tab welding structure described in the first aspect.

### BENEFICIAL EFFECTS

The embodiments of the present application primarily involve forming multiple welding point groups radially arranged on the full tab. This configuration confines the welding points within specified areas, establishing regularity in the arrangement, creating a more orderly layout compared to the disorganized distribution seen with conventional full tab laser welding. This enhances the over-current capacity of an electrode plate and reduces current loss due to disorganized welding point arrangements. To elaborate, initially, the full tab is formed on the wound body, which simplifies the manufacturing process compared to forming multiple tabs. The full tab is then welded to the current collector to create multiple welding point groups. The welding point groups are arranged in a radial distribution around the center of the wound body. The welding points in each welding point group are arranged in a wave pattern along the radial direction of the wound body. This setup confines multiple welding points within specific areas of the welding point groups, and arranges the multiple welding point groups in a radial pattern, which provides an orderly arrangement. This radial and orderly arrangement enables the tab to receive the current from the current collector and conducts the current through the welding point groups into the wound body more efficiently compared to the traditional disorganized welding point arrangement. This arrangement effectively enhances the regularity of current distribution, reduces the loss of current during current flow, and improves the over-current capacity of the electrode plate. The wave pattern arrangement also effectively differentiates this setup from "V" or "asterisk" shaped distributions of welding points commonly used in related technologies.

### BRIEF DESCRIPTION OF DRAWINGS

FIG. 1 is a perspective schematic view of a tab welding structure provided by one embodiment of the present application.
FIG. 2 is a planar schematic view of the tab welding structure provided by one embodiment of the present application.
FIG. 3 is a schematic view that simulates paths of the welding points, before removing the welding points not belonging to the welding point groups, according to one embodiment of the present application.

### Description of reference numerals in the drawings:

100 - wound body; 110 - full tab; 200 - welding point group; 210 - welding point subgroup; 211 - welding point; 300 - current collector; Q - winding direction.

### DETAILED DESCRIPTION OF EMBODIMENTS

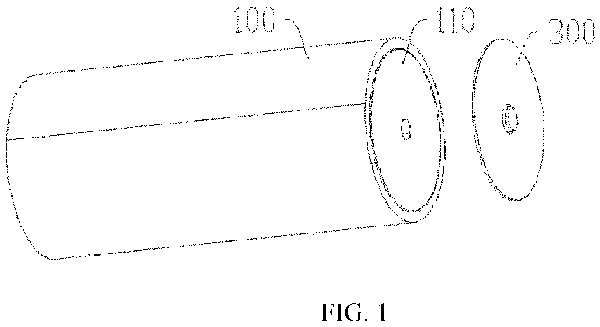

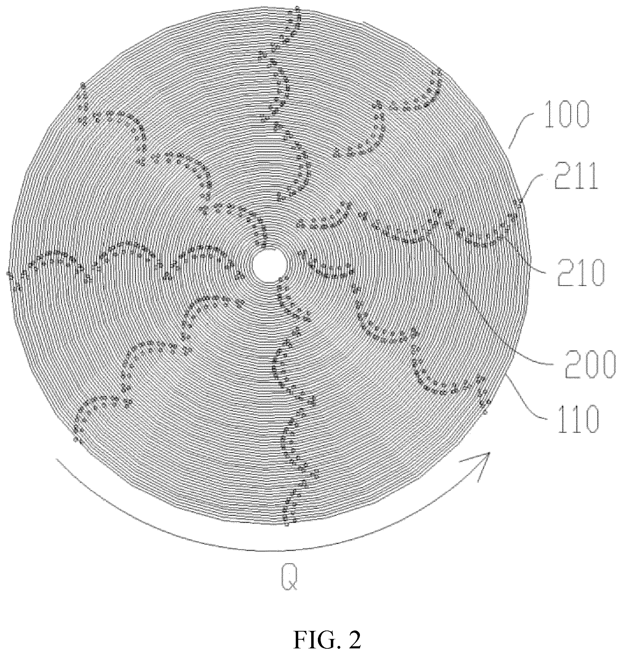

Please refer to FIGs. 1 and 2. An embodiment of the application provides a tab welding structure that includes:
a wound Body 100;
a full Tab 110, formed at one end of the wound body 100 and electrically connected to the wound body 100;
a current collector 300, welded to the full tab 110 to form a plurality of welding point groups 200. The welding point groups 200 are arranged radially around a center of the wound body 100, with a plurality of welding points 211 in each welding point group 200 arranged in a wave pattern along a radial direction of the wound body 100.

The technical solution provided in the present application primarily involves forming multiple welding point groups 200 radially arranged on the full tab 110. This configuration confines the welding points 211 within specified areas, establishing regularity in the arrangement, creating a more orderly layout compared to the disorganized distribution seen with conventional full tab laser welding. This enhances the over-current capacity of an electrode plate and reduces current loss due to disorganized arrangements of the welding points 211. To elaborate, initially, the full tab 110 is formed on the wound body 100, which simplifies the manufacturing process compared to forming multiple tabs. Subsequently, the full tab 110 is welded to the current collector 300 to create multiple welding point groups 200. The welding point groups 200 are arranged in a radial distribution around the center of the wound body 100. The welding points 211 in each welding point group 200 are arranged in a wave pattern along the radial direction of the wound body 100. This setup confines multiple welding points 211 within specific areas in the welding point groups 200, and arranges the multiple welding point groups 200 in a radial pattern, which provides an orderly arrangement. This radial and orderly arrangement enables the tab to receive the current from the current collector 300 and conduct the current through the welding point groups 200 into the wound body 100 more efficiently compared to the traditional disorganized arrangement of the welding points 211. This arrangement effectively enhances the regularity of current distribution, reduces the loss of current during current flow, and improves the over-current capacity of the electrode plate. The wave pattern arrangement also effectively differentiates this setup from "V" or "asterisk" shaped distributions of welding points 211 commonly used in related technologies.

It should be noted that the welding point group 200 is defined as a collection of multiple welding points 211. The welding point groups 200 are arranged in a radial distribution around the center of the wound body 100, meaning the welding point groups 200 are spaced circumferentially around the center of the wound body 100 and each welding point group 200 has a specific length along the radial direction of the wound body 100.

In some embodiments, the current collector 300 is a collector disk. The full tab 110 is welded to this collector disk to form multiple welding point groups, where the collector disk serves as a welding target for the full tab 110, primarily used for aggregating current to produce a higher current output or input. Certainly, in other embodiments, the current collector 300 can also be other shapes, such as cylindrical or rectangular plates, without specific limitations.

In some examples, the wound body 100 includes an electrode plate arranged in a winding manner and a separator attached to the electrode plate. The electrode plate is integrally connected to the full tab 110. The full tab 110 is flattened to cover one axial end of the wound body 100. One of the distinctions between the electrode plate and the full tab 110 is that the electrodes plate is coated with an active paste, whereas the full tab 110 is not. The tab is wound along with the winding of the electrode plate, and after the electrode plate form the wound body 100, a flattening process is applied to the tab, allowing the tab to cover one side of the wound body 100 in its axial direction.

In some embodiments, along the circumferential direction of the wound body 100, an angular distance error between each pair of adjacent welding point groups 200 is set within a range of 0° to 5°. This specification ensures that the angles and arc distances between neighboring welding point groups 200 tend to be equal, promoting uniformity even if multiple welding point groups 200 are set at equal arc intervals along the circumferential direction. This arrangement significantly improves the issues caused by irregular distribution of welding points 211, which can lead to excessive current loss during current flow, and improves uniformity of current conduction into the electrode plates, thereby reducing current loss. It should be noted that an angular distance is defined as an angle between a line connecting the first and last welding points 211 of one welding point group 200 along the radial direction of the wound body 100, and a line connecting the first and last welding points 211 of the next adjacent welding point group 200.

Furthermore, it should be noted that the angular distance error is in a range between 0° and 5°, including both endpoint values. Within this specified angle range, the impact on the positions of the welding points 211 and the uniformity of current flow is small, which is advantageous for maintaining the uniformity of current conduction and reducing the precision required for the arrangement of the welding point groups 200. Preferably, the angular error between multiple initial angles is set to 0°, meaning that multiple welding point groups 200 are arranged at equal angular distances along the circumferential direction of the wound body 100. Although the angular error range is limited to a narrow range in this embodiment, with an increasing number of winding turns, the positional errors in the distribution of the welding point groups 200 can gradually magnify. Therefore, under conditions allowing for precision, it is preferable to maintain the angular distance error range at 0°.

In some embodiments, each welding point group 200 includes a plurality of welding point subgroups 210. The welding point subgroups 210 are linearly arranged along the radial direction. This linear arrangement enables the welding point subgroups 210 to be aligned with substantial neatness, preventing chaotic distributions along the radial direction. Additionally, setting the welding point subgroups 210 linearly along the radial direction facilitates the pre-welding determination of the positions of the welding points 211, and simplifies the welding control and positioning of the welding points 211 during welding.

Furthermore, within each welding point subgroup 210, multiple welding points 211 are arranged in an arc shape along the radial direction of the wound body 100, ensuring that the welding points 211 within each welding point subgroup 210 exhibit a consistent and regular pattern of arrangement. This specific arrangement pattern is an arc shape along the radial direction, primarily to facilitate determination of the positions of the welding points 211 more conveniently. Specifically, before determining the positions of the welding points 211, the electrode plate is already wound along the winding direction Q to form the wound body 100. The wound body 100 also includes a separator. Since the separator is wound together with the electrode plate, and this application does not concern the structure and positional relationship of the separator, subsequent descriptions of the winding of the wound body 100, for simplicity, refer only to the electrode plate forming the wound body 100. Based on the shape of the wound body 100, the positions and numbers of welding points 211 are simulated according to actual circumstances. The simulation method for the welding points 211 involves determining the arc distances between adjacent welding points 211 along the winding direction Q, and then, based on the structure and position of the welding point subgroup 210, the welding points 211 not belonging to the welding point subgroup 210 are removed, thereby setting equal arc distances between multiple welding points 211 on each turn, making the determination of the welding point positions straightforward and precise.

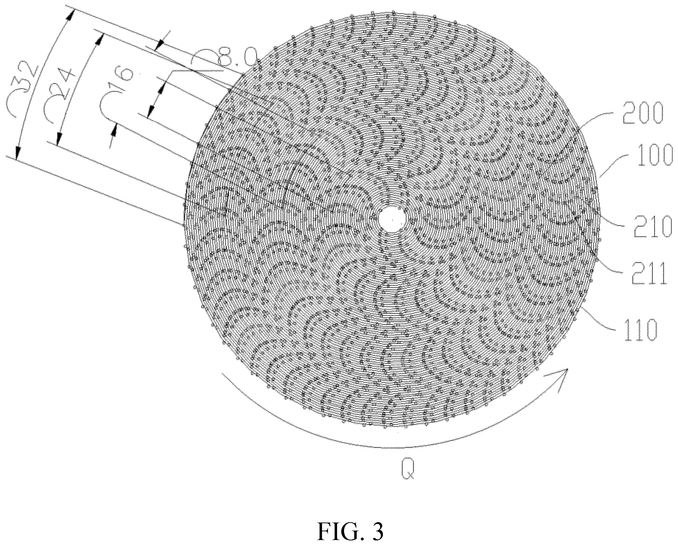

Please refer to FIG. 3, in the present embodiment, an internal diameter of the wound body 100 is set to 2.5mm, with an external diameter of 40mm, and the total number of winding turns is 90. The arc distance between adjacent welding points 211 is set at 4mm; the angle between each pair of adjacent welding point groups 200 is 45°, with an angular error of 0°, meaning there is no angular deviation. Initially, using preset parameters, simulation software such as AutoCAD (Auto Computer Aided Design) is used to simulate the shape of the wound body 100, incorporating the welding point groups 200 and paths of the welding points 211. The simulation of welding points 211 occurs in two steps. The first step involves forming multiple welding points 211 according to the arc distance along the winding direction Q. The second step involves removing the welding points 211 that do not belong to the welding point groups 200 or the welding point subgroups 210 based on the positions of the welding point groups 200 and the welding point subgroups 210, resulting in the final paths for the welding points 211 used for welding. At this stage, the path of the welding points 211 in the welding point subgroup 210 forms an arc shape, and the welding point subgroups 210 form multiple wave-shaped welding points groups 200 along the radial direction. According to the angles of 45° and the arc distance of 4mm, it can be inferred that the arrangement of the first circle of welding point subgroups 210 is achieved by removing a set of welding points 211 between adjacent welding point subgroups 210, the second circle of welding point subgroups 210 by removing three sets of welding points 211 between adj acent welding point subgroups 210, and so forth. Refer to FIG. 3, where the arc distance between adjacent welding point subgroups 210 in the first circle is 8mm, the arc distance between adjacent welding point subgroups 210 in the second circle is 16mm, the arc distance between adjacent welding point subgroups 210 in the third circle is 24mm, and the arc distance between adjacent welding point subgroups 210 in the fourth circle is 32mm. As the paths of the welding points 211 are formed based on the equal arc distance of 4mm, this ensures equal arc distances between multiple welding points 211 in each winding turn of the wound body 100, thereby improving the uniformity of current conduction between the full tab 110 and the electrode plate. With an increase in the number of winding turns and the number of welding points 211, the wave-shaped welding point groups 200 are formed.

Furthermore, the full tab 110 accompanies the multiple windings of the wound body 100, with multiple welding points 211 on the full tab 110 spaced sequentially along the winding direction Q of the wound body 100. The number of welding points 211 on the full tab 110 is equal for each turn of winding, and for the same turn, multiple welding points 211 are set at equal arc distances on the full tab 110 along the winding direction Q. By setting an equal arc distance for the multiple welding points 211 on each turn and maintaining an equal number of welding points per turn, the arc distance between adjacent welding points 211 increases with each turn. This arrangement allows the multiple welding points 211 to form an arc shape along the radial direction, constituting the welding point groups 200. It should be noted that each turn of winding refers to starting from one side of the electrode plate, with the winding completing one full circle back to this starting point, and subsequent turns starting and ending at this point.

In some embodiments, pairs of adjacent welding point subgroups 210 along the circumferential direction of the wound body 100 constitute welding point subgroup pairs. A distance between two welding point subgroups 210 within each welding point subgroup pair is positively correlated with the radial distance of the welding point subgroup pair from the center of the wound body 100. That is, the farther from the center of the wound body 100, the greater the distance between two adjacent welding point subgroups 210 in the circumferential direction, and this distance increases linearly. It should be noted that the distance between two welding point subgroups 210 refers to the distance between the centers of the patterns formed by the two welding point subgroups 210.

Furthermore, the arc distance between two welding point subgroups 210 within each welding point subgroup pair is defined as: D=n×s;
Wherein, D represents the arc distance between two adjacent welding point subgroups 210 within the welding point subgroup pair, n represents the number of welding point subgroups 210 arranged sequentially outward along the radial direction of the wound body 100, and s represents the arc distance between two adjacent welding points 211 in the first turn of the wound body 100. The formula for calculating the arc distance between two adjacent welding point subgroups 210 shows that the arc distance is directly proportional to the number of welding point subgroups 210 arranged sequentially in the radial direction away from the center of the wound body 100, and also directly proportional to the arc distance between two adjacent welding points 211 in the first turn of the wound body 100.

It should be noted that in any of the embodiments mentioned above, the welding points 211 are formed by spot welding. The spot welding method ensures that the welding points 211 on the full tab 110 are uniformly spaced along the winding direction Q, which facilitates uniform current conduction into the electrode plate. Additionally, by using spot welding to create welding points 211, their size can be adjusted based on actual conditions to ensure that the connection between the tab and the collector disk can withstand detachment force under various conditions. Regarding the shape of welding points 211, it can be set to square, circular, or other shapes based on actual conditions such as the distance between adjacent winding turns and the distance between adjacent welding points 211 along the winding direction Q. In the present embodiment, a circular shape is preferred for ease of spot welding operations. A diameter range for the welding points 211 can be set between 0.5 to 3 mm.

Furthermore, to clearly show the positions of the welding points 211 in the accompanying drawings, all welding points 211 in the drawings are represented as hollow circles. It is important to note that these hollow circles are not the actual shape of the welding points 211, and the structural shape of welding points 211 should not be construed as restrictive based on these illustrations.

In some embodiments, the wound body 100 includes both a positive terminal and a negative terminal, with the full tab 110 connected to either the positive terminal, or the negative terminal without specific restrictions. The choice of connection depends on actual conditions.

The present application provides a battery that includes the tab welding structure as described in any of the aforementioned embodiments. It should be noted that because the battery incorporates the tab welding structure described in any of the aforementioned embodiments, it benefits from the advantageous effects similar or identical to those provided by the tab welding structure. The specific beneficial effects and their derivation process can be found in the embodiments of the tab welding structure, and will not be reiterated here.

## Claims

1. A tab welding structure, **characterized in that** comprises:
a wound body (100);
a full tab (110), arranged at one end of the wound body (100) and electrically connected to the wound body (100); and
a current collector (300), welded to the full tab (110) to form a plurality of welding point groups (200), wherein the welding point groups (200) are arranged in a radial pattern around a center of the wound body (100), and each of the welding point groups (200) comprises a plurality of welding points (211) arranged in a wave pattern along a radial direction of the wound body (100).

2. The tab welding structure according to claim 1, wherein along a circumferential direction of the wound body (100), an angular distance error between each pair of adjacent welding point groups (200) is within a range of 0° to 5°.

3. The tab welding structure according to claim 2, wherein an angular error between multiple initial angles is 0°, and the welding point groups (200) are arranged at equal angular distances along the circumferential direction of the wound body (100).

4. The tab welding structure according to any one of claims 1 to 3, wherein each of the welding point groups (200) comprises a plurality of welding point subgroups (210), and the welding points (211) in each welding point subgroup (210) are arranged in an arc shape along the radial direction of the wound body (100).

5. The tab welding structure according to claim 4, wherein the full tab (110) accompanies multiple turns of winding of the wound body (100), the welding points (211) on the full tab (110) are spaced apart sequentially along a winding direction (Q) of the wound body (100), and a number of the welding points (211) is equal on each turn of winding on the full tab (110); optionally
on the same turn of winding on the full tab (110), the welding points (211) are set at equal arc distances along the winding direction (Q).

6. The tab welding structure according to any one of claims 4 to 5, wherein along the circumferential direction of the wound body (100), each pair of adjacent welding point subgroups (210) constitutes a welding point subgroup pair, and in each welding point subgroup pair, a distance between the two welding point subgroups (210) is positively correlated with a distance of the welding point subgroup pair from the center of the wound body (100) along the radial direction.

7. The tab welding structure according to claim 6, wherein in each welding point subgroup pair, an arc distance between the two welding point subgroups (210) is equal to a product of a number of the welding point subgroups (210) arranged sequentially outward along the radial direction of the wound body (100) and the arc distance between two adjacent welding points (211) in the first turn of winding of the wound body (100).

8. The tab welding structure according to claim 7, wherein the arc distance between the two welding point subgroups (210) in each welding point subgroup pair is D=n×s;
D represents the arc distance between the two adjacent welding point subgroups (210) in each welding point subgroup pair, n represents the number of the welding point subgroups (210) arranged sequentially outward along the radial direction of the wound body (100), and s represents the arc distance between two adjacent welding points (211) in the first turn of winding of the wound body (100).

9. The tab welding structure according to any one of claims 1 to 8, wherein the current collector (300) is a collector disk, the collector disk is welded to the full tab (110) to form the welding point groups (200).

10. The tab welding structure according to claim 1, wherein the wound body (100) comprises an electrode plate disposed in a winding arrangement and a separator attached to the electrode plate, and the electrode plate is integrally connected to the full tab (110) which is flattened to cover one axial end of the wound body (100); optionally
a surface of the electrode plate is coated with an active paste.

11. The tab welding structure according to any one of claims 1 to 10, wherein an internal diameter of the wound body (100) is 2.5 mm, with an external diameter of 40 mm, a number of winding turns is 90, the arc distance between adjacent welding points (211) is 4 mm, and an angle between each pair of adjacent welding point groups (200) is 45°, with an angular error of 0°.

12. The tab welding structure according to any one of claims 4 to 10, wherein the arc distance between adjacent welding point subgroups (210) in the first turn of winding of the wound body (100) is 8 mm, the arc distance between adjacent welding point subgroups (210) in the second turn of winding is 16 mm, the arc distance between adj acent welding point subgroups (210) in the third turn of winding is 24 mm, and the arc distance between adjacent welding point subgroups (210) in the fourth turn of winding is 32 mm.

13. The tab welding structure according to claim 1, wherein the current collector (300) is welded to the full tab (110) by spot welding, the welding points (211) are circular-shaped, and a diameter of each of the welding points (211) ranges from 0.5 to 3 mm.

14. The tab welding structure according to claim 1, wherein the wound body (100) comprises a positive terminal and a negative terminal, and the full tab (110) is connected to either the positive terminal or the negative terminal.

15. A battery, **characterized in that** comprises the tab welding structure of any one of claims 1 to 14.
